# EUROPEAN PATENT APPLICATION

(11) **EP 3 249 784 A1**
(43) Date of publication of application: **29.11.2017**
(21) Application number: 16170815.1
(22) Date of filing: 23.05.2016
(51) Int. Cl.: H02K 3/50

(54) **AN ELECTRIC MACHINE**

(71) Applicant: ABB Schweiz AG, 5400 Baden (CH)
(72) Inventor: Raute, Rami, 00980 Helsinki (FI); Metsberg, Heikki, 00380 Helsinki (FI); Sandholm, Klas, 00380 Helsinki (FI); Sundström, Jani, 00710 Helsinki (FI)
(74) Representative: Kolster Oy Ab

(57) **Abstract**

The electric machine comprises a stator (200) with a stator core (210), a stator winding (211) and a stator frame (220). The stator core has a longitudinal centre axis (X-X) and two opposite axial ends. The stator winding has a first winding overhang (211A) extending outwards from the first axial end of the stator core and comprising open ends of groups of wiring loops. The stator frame has at least an end portion (222) extending axially outwards from the first axial end of the stator core. A connection arrangement (300) and a support arrangement (400) is arranged at the first axial end of the stator core. The connection arrangement connects wiring loops in the first winding overhang to connection terminals in a connection space of the electric machine. The support arrangement comprises axially extending support bars (410) attached to the stator core and supporting the connection arrangement. An outer end of the support bars is attached to at least one support flange (420), the at least one support flange being further attached to the end portion of the stator frame.

## Description

### FIELD

The invention relates to an electric machine with a stator comprising a cylindrical, hollow stator core with a longitudinal centre axis, an inner surface, an outer surface, a first axial end, and a second opposite axial end, a stator frame surrounding the outer surface of the stator core, and a stator winding comprising a first end portion with open wiring ends extending outwards from the first axial end of the stator core. The electric machine comprises further a connection arrangement for connecting the first end portion of the stator winding to connection terminals of the electric machine, said connection arrangement being situated axially outwards from the first axial end of the stator core, and a support arrangement for supporting the connection arrangement at the stator core.

The need for larger electric machines, especially generators, operating on a low voltage and thereby requiring a big current is increasing. The connection arrangement by means of which the stator winding is connected to the bus bars leading to the connection box of the electric machine cannot be expanded in the radial direction. An expansion of the connection arrangement in the radial direction would lead to the fact that the dimensions of the stator frame would have to be increased radially at least at the connection arrangement. This would not be acceptable. It is thus only possible to expand the connection arrangement in the axial direction. There is thus a need for a reliable connection arrangement positioned at a connection end of the electric machine.

### BACKGROUND

DE patent publication 10 2008 064 500 discloses a connection arrangement and a support arrangement for an electric machine. The cylindrical stator comprises a laminated core, a stator winding, a stator winding overhang, a connection arrangement and a support arrangement. The connection arrangement comprises coil circuits arranged axially in front of the winding overhang. The support arrangement comprises axially extending support bars being distributed along a perimeter of the stator core, and at least one support ring. A first end of the support bars are attached to the stator core and the support ring is attached to a second outer end of the support bars. The coil circuits are attached to the at least one support ring that is made of glass fiber. The support bars and the at least one support ring form a support structure that is only supported at the stator core from the first inner ends of the support bars.

### SUMMARY

An object of the present invention is to achieve an electric machine with an improved connection arrangement at one end of the stator core.

The electric machine according to the invention is defined in claim 1.

The electric machine comprises:
a stator with a stator core, a stator winding and a stator frame, the stator core having a cylindrical shape with a longitudinal centre axis, an inner surface, an outer surface, a first axial end and a second opposite axial end, the stator winding having a first winding overhang extending outwards from the first axial end of the stator core, the stator frame having at least an end portion extending axially outwards from the first axial end of the stator core,
a connection arrangement for connecting wiring loops in the first winding overhang of the stator winding together to form groups of wiring loops and/or for connecting groups of wiring loops together and/or for connecting groups of wiring loops to connection terminals in a connection space of the electric machine,
a support arrangement for supporting the connection arrangement at the stator core, the support arrangement comprising axially extending support bars being distributed along a perimeter of the stator core, a first end of the support bars being attached directly or indirectly to the stator core,
the electric machine is characterized in that:
   a second opposite end of the support bars is attached to at least one support flange, said at least one support flange being further attached to the end portion of the stator frame.

The support arrangement in which the at least one support flange is attached to the outer ends of the support bars and to the end portion of the stator frame provides a rigid and reliable support for the connection arrangement. The support arrangement can withstand dynamic stresses acting in the radial direction very well due to the additional support point or support points in the end portion of the stator frame.

There is no upper limit for the stator current in the connection arrangement. The axial length of the connection arrangement can be made as long as needed by extending the end portion of the stator frame. The prolonging of the connection arrangement means that a greater number of connection means can be used in order to transfer the stator current between the first overhang of the stator winding and the connection terminals of the electric machine.

The connection arrangement may comprise axially extending connection pieces distributed along a perimeter of the stator core, said connection pieces connecting adjacent wiring loops into groups of wiring loops.

The connection arrangement may further comprise connection elements connecting groups of wiring loops together and/or connecting groups of wiring loops directly or indirectly to respective connection terminals in the connection space of the electric machine.

The connection arrangement can be installed on the end of the stator core in a separate installation step. The connection pieces and the connection elements may be installed one by one at the end of the stator core. Open ends of adjacent wiring loops may be connected together with the connection pieces to form a group of wiring loops. Groups of wiring loops may further be connected together in series or in parallel with the connection elements. Respective ends of the groups of wiring loops may then be connected to a respective connection terminal in the connection space of the electric machine. The connection elements may be supported on the support bars e.g. with fiber lashings. The at least one support flange can then finally be attached to the second ends of the support bars and to the stator frame.

A threaded joint may be used when attaching the first end of the support bars directly to the stator core or indirectly to the stator core via the back beams that are attached to the stator core. A threaded joint withstands the stresses caused by the vibrations of the electric machine during the lifetime of the electric machine better compared to e.g. a welded joint.

The at least one support flange may be attached to the support bars and to the stator frame with a compression joint. A compression joint may be achieved with bolts and nuts. The nuts may further be provided with friction increasing means in order to prevent loosening of the nuts due to vibrations. Another possibility is to use resilient washers under the nuts.

The invention can be used in connection with electric machines having a big nominal current in the order of at least 1000 A. The electric machine may be a generator e.g. a synchronous generator for a wind turbine, a diesel generator etc.

### DRAWINGS

In the following the invention will be described in greater detail by means of preferred embodiments with reference to the attached drawings, in which
Fig. 1 shows a longitudinal cross section of an electric machine,
Fig. 2 shows an axonometric view of a stator,
Fig. 3 shows an axonometric view of the connection side of the stator,
Fig. 4 shows a transverse cross-section of the stator.

### DETAILED DESCRIPTION

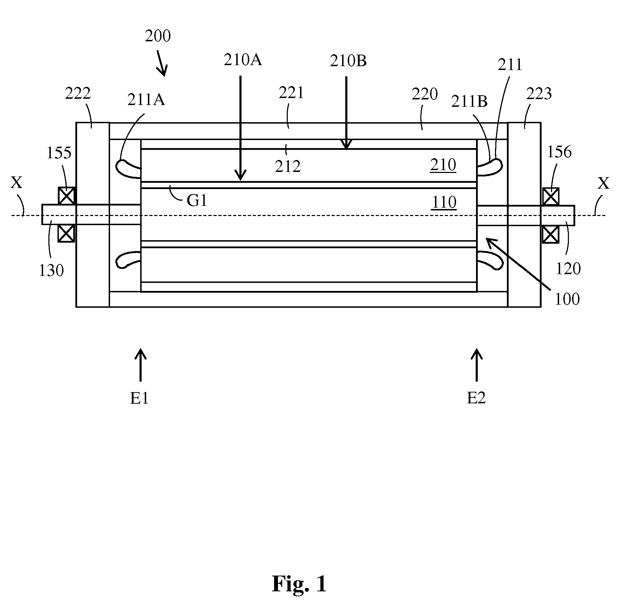

Fig. 1 shows a longitudinal cross section of an electric machine. The electric machine comprises a longitudinal centre axis X-X, a cylindrical rotor 100 and a cylindrical stator 200 surrounding the rotor 100. The electric machine can be an electric motor or an electric generator.

The rotor 100 comprises a centre portion 110 provided with a rotor winding (not shown in the figure) and two end portions 120, 130 at each axial X-X end of the centre portion 110. Each end portion 120, 130 of the rotor 100 may be rotatably supported with a bearing 155, 156 on a support structure.

The stator 200 comprises a stator core 210, a stator frame 220, and a stator winding 211. The stator core 210 has a cylindrical shape provided with an inner bore receiving the rotor 100. The stator core 210 comprises an inner surface 210A, an outer surface 210B, a first axial X-X end E1 and an opposite second axial X-X end E2. The inner surface 210A of the stator core 210 is provided with slots receiving the stator winding 211. Axially X-X extending back beams 212 may be attached to the outer surface 210B of the stator core 210.

The stator frame 220 may comprise a middle portion 221 surrounding the stator core 210 and an end portion 222, 223 at each axial X-X end E1, E2 of the stator core 210. The end portions 222, 223 extend axially X-X outwards from the axial ends E1, E2 of the stator core 210. The middle portion 221 of the stator frame 220 may on the other hand be left out, whereby the end portions 222, 223 may be attached to the ends of the stator core 210. Each axial portion 221, 222, 223 of the stator frame 220 may be made of one piece or of several segment pieces.

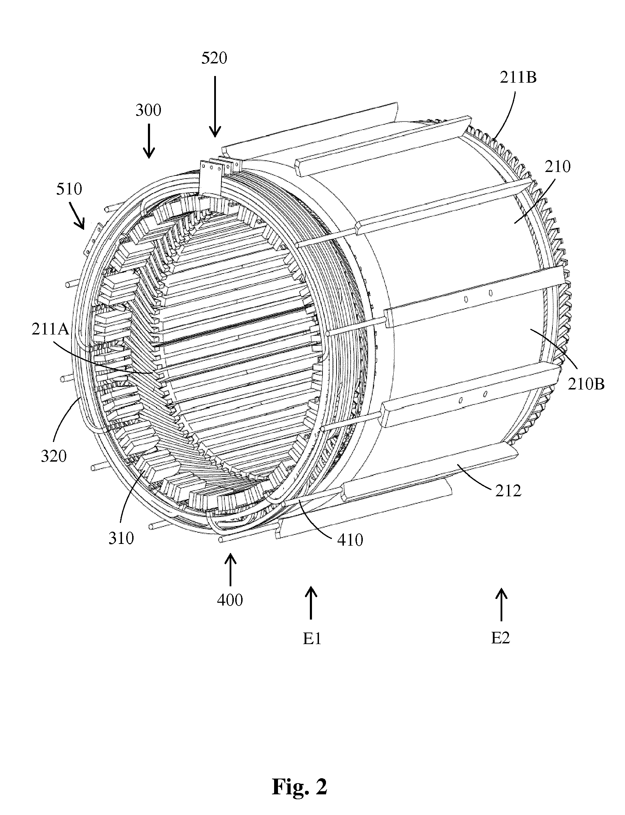

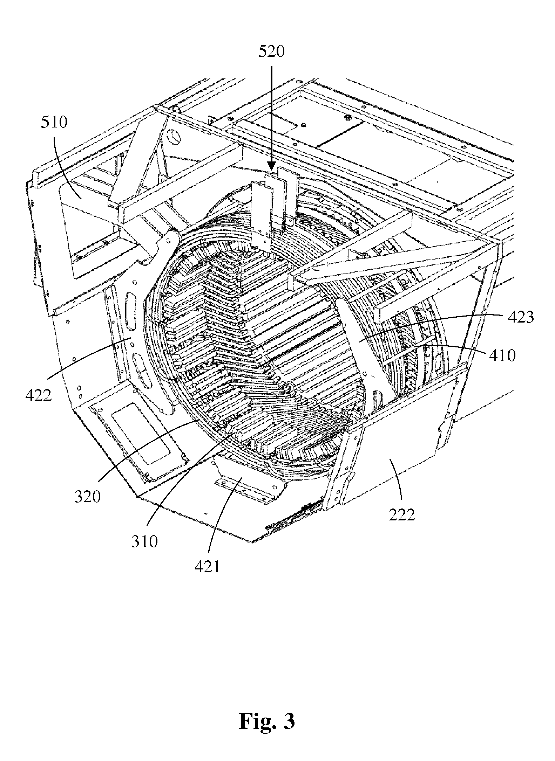

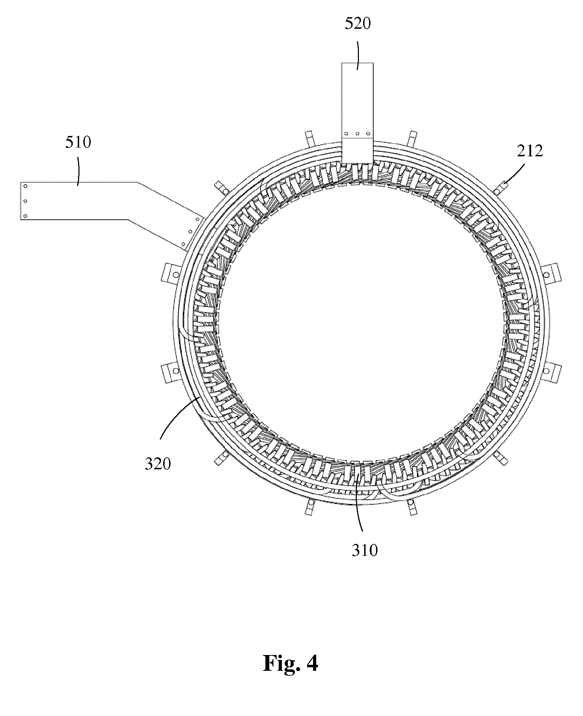

Fig. 2 shows an axonometric view of a stator, fig. 3 shows an axo-nometric view of the connection side of the stator, and fig. 4 shows a transverse cross-section of the stator.

The stator core 210 may have a cylindrical form with a hollow interior. The inner surface 210A of the stator core 210 may be provided with axially X-X extending slots receiving the stator winding 211. The stator core 210 may have a laminated structure i.e. it may be composed of annular sheets that are stacked together to form the stator core 210. Each sheet in the stator core 210 may be formed of a single uniform sheet or of sectors forming the generally circular sheet. The stator core 210 may further be provided with axially X-X extending back beams 212 attached to the outer surface 210B of the stator core 210. The back beams 212 may be attached by welding to the outer surface 210B of the stator core 210. The back beams 212 hold the package of annular stator sheets together.

The stator winding 211 may comprise a middle portion situated in the axial slots in the stator core 210, a first winding overhang 211A extending outwards from a first axial X-X end E1 of the stator core 210 and a second winding overhang 211 B extending outwards from a second opposite axial X-X end E2 of the stator core 210. The wiring loops in the first winding overhang 211A may have open ends. The wiring loops in the second winding overhang 211 B may be closed. The first winding overhang 211A will thus contain both ends of the first phase, the second phase and the third phase of the stator winding 211. Both ends of each phase winding may be taken out of the stator 200 and connected to respective terminals in the connection space of the electric machine. There will thus be six phase terminals in the connection space when both ends of the three phase windings are taken out of the stator 200 stator. There will be only three phase terminals in the connection space when only one end of the three phase windings are taken out of the stator 200. The latter case means that the stator winding 211 is connected into a star or delta connection already within the electric machine.

The electric machine may further comprise a connection arrangement 300 for connecting wiring loops in the first winding overhang 211A of the stator winding 211 together to form groups of wiring loops and/or for connecting groups of wiring loops to connection terminals in the connection space of the electric machine. The connection arrangement 300 may be situated axially X-X outwards from the first axial end E1 of the stator core 210.

The connection arrangement 300 may comprise connection pieces 310. The connection pieces 310 may extend axially X-X and they may be distributed along a perimeter of the stator core 210. The connection pieces 310 may be used to connect adjacent wiring loops together in order to form groups of wiring loops. Open ends of adjacent wiring loops may be connected together with the connection pieces 310.

The connection arrangement 300 may further comprise connection elements 320. The connection elements 320 may be used to connect two or more groups of wiring loops together in series or in parallel. A first end of a connection element 320 may be connected to an open end of a first group of wiring loops and a second end of a connection element 320 may be connected to an open end of a second group of wiring loops. The connection elements 320 may further be used to connect first ends of respective groups of wiring loops into a respective conductor rail in a first set 510 of conductor rails and to connect second ends of respective groups of wiring loops to a respective conductor rail in a second set 520 of conductor rails. A first end of the group of wiring loops forming the first phase of the stator winding 211 is connected to a first conductor rail in the first set of conductor rails 510 and a second end of said group of wiring loops is connected to a first conductor rail in the second set of conductor rails 520. A first end of the group of wiring loops forming the second phase of the stator winding 211 is connected to a second conductor rail in the first set of conductor rails 510 and a second end of said group of wiring loops is connected to a second conductor rail in the second set of conductor rails 520. A first end of the group of wiring loops forming the third phase of the stator winding 211 is connected to a third conductor rail in the first set of conductor rails 510 and a second end of said group of wiring loops is connected to a third conductor rail in the second set of conductor rails 520.

There may be three conductor rails in the first set of conductor rails 510 i.e. a conductor rail for each phase in the stator winding 211. First ends of the stator winding 211 may be connected to a first set of connection terminals in the connection space. The first set of connection terminals comprises three connection terminals i.e. a connection terminal for each phase.

There may further be three conductor rails in the second set of conductor rails 520 i.e. a conductor rail for each phase in the stator winding 211. Second ends of the stator winding 211 may be connected to a second set of connection terminals in the connection space. The second set of connection terminals comprises three connection terminals i.e. a connection terminal for each phase.

The conductor rails in the first set of conductor rails 510 and in the second set of conductor rails 520 run from the vicinity of the connection arrangement 300 to a respective connection terminal in the connection space in the electric machine.

The connection pieces 310 may be distributed on a perimeter surrounding a circle formed by the inner surface 210A of the stator core 210. The perimeter may be circular or polygonal. Open ends of the wiring loops may be connected by soldering in the connection piece 310. The ends of the connection elements 320 may also be connected with soldering. The connection piece 310 may have a generally rectangular shape as shown in the figures.

The connection elements 320 may be ring shaped and formed as sectors of a ring or as sections of a circle circumference. The connection elements 320 may run along a perimeter that is situated radially inwards in relation to the perimeter formed of the support bars 410 and radially outwards in relation to a perimeter formed of the connection pieces 310. The angular length of the connection elements 320 along the ring varies depending on what the connection element 320 connects. The connection elements 320 may connect two or more groups of wiring loops together or they may connect open ends of groups of wiring loops to a respective conductor rail in the first set of conductor rails 510 or to a respective conductor rail in the second set of conductor rails 520. The first set of conductor ails 510 and the second set of conductor rails 520 lead from the vicinity of the connection elements 320 to the connection terminals in the connection space of the electric machine. The connection elements 320 may instead of forming sections of a circle circumference from a polygonal line. The connection elements 320 may run along a perimeter surrounding the opening of the stator core 210 at the first end E1 of the stator core 210. The perimeter along which the connection elements 320 run is on the other hand situated inside the circle formed by the support bars 410.

The connection space may be formed within a connection box attached to the stator frame 220. The connection box may on the other hand be formed as an integral part of the stator frame 220 within the stator frame 220.

The electric machine comprises further a support arrangement 400 being situated axially X-X outwards from the first axial end E1 of the stator core 210 in order to support the connection arrangement 300 at the stator core 210.

The support arrangement 400 may comprise axial support bars 410 being distributed on a perimeter surrounding the connection elements 320. A first end of the support bars 410 may be attached to the back beams 212 that are attached to the outer surface 210B of the stator core 210. The first end of the support bars 410 may be provided with an outer threading that fits into an inner threading provided in a bore extending axially X-X into the back beams 212 from the axial X-X ends of the back beams 212. A first end of the support bars 410 may on the other hand be attached directly to the stator core 210. The first end of the support bars 410 may be provided with an outer threading that fits into an inner threading provided in a bore extending axially X-X into an end surface of the stator core 210. The support bars 410 may thus be attached directly or indirectly through the back beams 212 to the stator core 210. The connection elements 320 may be attached with fiber lashings to the support bars 410 (this is not shown in the figures). There are four support bars 410 at the left hand side portion of the stator core 210, four support bars 410 at the right hand side portion of the stator core 210, and two support bars 410 at the lower portion of the stator core 210.

The support arrangement 400 may further comprise at least one support flange 420 being attached to a second opposite end of the support bars 410 and to the stator frame 220.

The support arrangement may comprise three support flanges 421, 422, 423. The three support flanges 421, 422, 423 may be arranged in the following way. A first support flange 421 is positioned on a vertical centre line in a lower portion of the electric machine. A second support flange 422 is positioned on a horizontal centre line in a left hand middle portion of the electric machine. A third support flange 423 is positioned on a horizontal centre line in a right hand middle portion of the electric machine opposite to the second support flange 422.

All three support flanges 421, 422, 423 may comprise holes so that the second ends of the support bars 410 can pass through said holes. All three support flanges 421, 422, 423 may on the one hand be attached to the second ends of the support bars 410 with nuts threaded on the second ends of the support bars 410 and on the other hand with bolts and nuts to the stator frame 220 of the electric machine. The first support flange 421 may be attached to the two lowermost support bars 410. The second support flange 421 may be attached to the four support bars 410 on the left hand side of the stator core 210 and the third support flange 423 may be attached to four support bars 410 on the right hand side of the stator core 210.

The arrangement with three support flanges 421, 422, 423 forms a rigid support between the support bars 410 and the stator frame 220 and leaves plenty of openings for cooling air to pass. Any number of support flanges 420 could, however, be used in the invention. There could be e.g. only one support flange 420 supporting all the support bars 410 at the stator frame 220.

The support flanges 421, 422, 423 are in the figures attached to the first end portion 222 of the stator frame 220 with radially extending bolts and nuts. It would, however, be possible instead to attach the support flanges 421, 422, 423 with axially X-X extending bolts and nuts to the first end portion 222 of the stator frame 220 i.e. to the end surface of the first end portion 222 of the stator frame 220.

The connection arrangement 300 in combination with the support arrangement 400 provides a reliable support for the connection fulfilling all the dynamic stress requirements of the connection and/or the support.

There is no upper limit for the stator current in the connection arrangement 300. The axial X-X length of the connection arrangement 300 can be made as long as needed by prolonging the axial X-X length of the first end portion 222 of the stator frame 220 in case the stator frame 220 comprises at least the end portions 222, 223. In case the stator frame 220 comprises only a middle portion 221 extending beyond the axial X-X ends E1, E2 of the stator core 210, the axial X-X length of the middle portion 221 can be prolonged. The prolonging of the connection arrangement 300 means that a greater number of connection elements 320 can be used in order to transfer the stator current between the first end portion 211A of the stator winding 211 and the connection terminals of the electric machine.

The connection arrangement 300 can be installed in a separate step to the electric machine. The axial connection pieces 310 and the connection elements 320 can then be installed one at a time into the first end E1 of the stator core 210. The stator core 210 may be positioned in a vertical position during the installation of the connection arrangement 300. The open ends of adjacent wiring loops may be connected together with the connection pieces 310 to form groups of wiring loops. Groups of wiring loops may further be connected in series or in parallel with the connection elements 320. The first open ends of the respective groups of wiring loops may be connected with the connection elements 320 to a respective conductor rail in the first set of conductor rails 510 and the second open ends of the respective groups of wiring loops may be connected with the connection elements 320 to a respective conductor rail in the second set of conductor rails 520. The connection elements 320 may be attached to the support bars 410 e.g. with fiber lashings. When the connection arrangement 300 has been completed, the at least one support flange 420 can finally be attached to the second ends of the support bars 410 and to the stator frame 220.

A threaded joint may be used when attaching the first end of the support bars 410 directly to the stator core 210 or indirectly to the stator core 210 via the back beams 212 that are attached to the stator core 210. A threaded joint withstands the stresses caused by the vibrations of the electric machine during the lifetime of the electric machine better compared to e.g. a welded joint.

The at least one support flange 420 may be attached to the support bars 410 and to the stator frame 220 with a compression joint. A compression joint can be achieved with bolts and nuts. The nuts may further be provided with friction increasing means in order to prevent loosening of the nuts due to vibrations. Another possibility is to use resilient washers under the nuts.

It will be obvious to a person skilled in the art that, as the technology advances, the inventive concept can be implemented in various ways. The invention and its embodiments are not limited to the examples described above but may vary within the scope of the claims.

## Claims

1. An electric machine comprising:
a stator (200) with a stator core (210), a stator winding (211) and a stator frame (220), the stator core (210) having a cylindrical shape with a longitudinal centre axis (X-X), an inner surface (210A), an outer surface (210B), a first axial (X-X) end (E1) and a second opposite axial (X-X) end (E2), the stator winding (211) having a first winding overhang (211 A) extending outwards from the first axial (X-X) end (E1) of the stator core (210), the stator frame (220) having at least an end portion (222) extending axially (X-X) outwards from the first axial (X-X) end (E1) of the stator core (210),
a connection arrangement (300) for connecting wiring loops in the first winding overhang (211A) of the stator winding (211) together to form groups of wiring loops and/or for connecting groups of wiring loops together and/or for connecting groups of wiring loops to connection terminals in a connection space of the electric machine,
a support arrangement (400) for supporting the connection arrangement (300) at the stator core (210), the support arrangement (400) comprising axially (X-X) extending support bars (410) being distributed along a perimeter of the stator core (210), a first end of the support bars (410) being attached directly or indirectly to the stator core (210),
**characterized in that**:
a second opposite end of the support bars (410) is attached to at least one support flange (420), said at least one support flange (420) being further attached to the end portion (222) of the stator frame (220).

2. The electric machine according to claim 1, **characterized in that** the connection arrangement (300) comprises axially (X-X) extending connection pieces (310) distributed along a perimeter of the stator core (210), said connection pieces (310) connecting adjacent wiring loops into groups of wiring loops.

3. The electric machine according to claim 1 or 2, **characterized in that** the connection arrangement (300) comprises further connection elements (320) connecting groups of wiring loops together and/or connecting groups of wiring loops directly or indirectly to respective connection terminals in the connection space of the electric machine.

4. The electric machine according to claim 3, **characterized in that** the connection elements (320) are formed as sectors of a ring running along a perimeter within the perimeter formed of the support bars (410).

5. The electric machine according to claim 4, **characterized in that** the connection elements (320) are attached with fiber lashings on the support bars (410).

6. The electric machine according to any one of claims 1 to 5, **characterized in that** the electric machine comprises a first set of conductor rails (510) passing from the vicinity of the connection arrangement (300) to the connection terminals in the connection space of the electric machine for connecting groups of winding loops to a first set of connection terminals.

7. The electric machine according to any one of claims 1 to 6, **characterized in that** the electric machine comprises a second set of conductor rails (520) passing from the vicinity of the connection arrangement (300) to the connection terminals in the connection space of the electric machine for connecting groups of winding loops to a second set of connection terminals.

8. The electric machine according to any one of claims 1 to 7, **characterized in that** the stator winding (211) has a second winding overhang (211 B) extending outwards from the second axial (X-X) end (E2) of the stator core (210).

9. The electric machine according to any one of claims 1 to 8, **characterized in that** the at least one support flange (420) comprises three support flanges (421, 422, 423).

10. The electric machine according to claim 9, **characterized in that** a first support flange (421) is positioned on a vertical centre line in a lower portion of the electric machine, a second support flange (422) is positioned on a horizontal centre line in a left hand middle portion of the electric machine, a third support flange (423) is positioned on a horizontal centre line in a right hand middle portion of the electric machine opposite to the second support flange (422).

11. The electric machine according to any one of claims 1 to 10, **characterized in that** the first end of the support bars (410) is attached indirectly or directly with a threaded joint to the stator core (210).

12. The electric machine according to claim 11, **characterized in that** the first end of the support bars (410) is attached with a threaded joint to axially (X-X) extending back beams (212) being attached to the outer surface (210B of the stator core (210).

13. The electric machine according to claim 11, **characterized in that** the first end of the support bars (410) is attached with a threaded joint directly to the stator core (210).

14. The electric machine according to any one of claims 1 to 13, **characterized in that** the second end of the support beams (410) is attached to the at least one support flange (420) with a compression joint.

15. The electric machine according to any one of claims 1 to 14, **characterized in that** the at least one support flange (420) is attached to the end portion (222) of the stator frame (220) with a compression joint.
